# EUROPEAN PATENT APPLICATION

(11) **EP 0 850 564 A1**
(43) Date of publication of application: **01.07.1998**
(21) Application number: 97500205.6
(22) Date of filing: 25.11.1997
(51) Int. Cl.: A01N 25/10, A01N 25/24

(54) **Emulsifiable vinylic concentrate inhibiting the chitin synthesis in arthropods, for the control of pests and allergens**

(30) Priority: 23.12.1996 ES 9602724
(71) Applicant: Mateo Herrero, Maria Pilar, 45007 Valencia (ES)
(72) Inventor: Mateo Herrero, Maria Pilar, 45007 Valencia (ES)
(74) Representative: Gonzalez Gonzalez, Pablo

(57) **Abstract**

EMULSIFIABLE VINYLIC CONCENTRATE INHIBITING THE CHITIN SYNTHESIS IN ARTHROPODS, FOR THE CONTROL OF PESTS AND ALLERGENS, this invention refers to the composition of a non-toxic concentrate which inhibits the synthesis of chitin in arthropods, in all the stages of their biological cycle, simultaneously acting as a sterilizing agent for adult females and further having inhibitors for the regulation function of growth, being reinforced with products which immediately provide a shock effect as well as a residual action.

More specifically, it refers to a composition comprising and active compounds of new generation which are microencapsulated in the resin during the manufacturing process, this being a product with residual action and being referred to the formula:

| | FROM | TO |
|---|---|---|
| Water | 10% | 80% |
| Resin (vinylic or acrylic) | 1% | 100% |
| Chitin inhibitor | 0.001% | 40% |
| Organophosphorates | 0.001% | 5% |
| Pyrethroids (cypermethrin or deltamithrin) | 0.001% | 20% |

## Description

This invention refers to the composition of a non-toxic vinylic concentrate which inhibits the synthesis of chitin in arthropods (insects and mites), in all the stages of their biological cycle (larva, nymph, adult), acting simultaneously as a sterilizing agent for adult females and also having inhibitors for the regulator function of growth and sterilizers of the adult females, being reinforced with products able to provide it with an immediate shock effect as well as with a residual action.

More specifically, it refers to a composition comprising resin and active compounds which are microencapsulated in the resin during the manufacturing process, which allows it to be a product with residual action.

Insecticides and disinfectants presented in concentrates to be sold in the market are presently known, and which depending on their intensity of application, are more or less diluted in water in order to facilitate their pulverization or aspersion on those surfaces or places to be treated, either for desinfection or for fumigation.

However, said products, precisely due to their condition of simple mixtures with great facility to be dissolved, they do not adopt the condition of microencapsulates, their action thereby resulting highly volatile and with low persistence, this frequently making useless their application in view of their rapidity of action but without avoiding the arrival of new bacteria or insect clouds which repeat the cycle until the infinite.

On the other hand, and obligated by the need of a commercial efficiency, the active ingredients of such concentrates may become harmful and dangerous, either for the humans as for animals and being also cumulative in the organism, as in the case of DDT, HCH, LINDANE, etc., even phosphorates such as Parathion, or uncomfortable as Pyrethrums and similar, which after having been pulverized easily enter in contact with the animal mucousa causing dangerous affections, and even the death.

The present invention provides a novel form of controlling arthropods, and above all, it is the most effective non-toxic method for the control, with a residual power, of pests responsible for the transmission of endemic diseases such as Malaria, Paludism and other more common diseases, which are very widespread in the modern society, such as allergies.

It is a high-tech product specially indicated for those places difficult to be acceded and where paints are difficult to be applied. Also it is used as cleaner and preparer product for any type of surfaces, being at same time used as a maintenance product with long resistance and duration.

This concentrate is a product that is emulsified with water, its concentrate percentage depending on the place where is to be applied (for example, if the affectation is on a bed of a stable where there are some dregs with fly larvas, the bed must be treated with a 2% percentage; if used to clean a bed, 10 cc in 8 liters of water, in matter of mites, etc. ...).

It is a highly active, wide action spectrum product, which mainly acts as whirling, contact, inhalation and ingestion, inhibiting the chitin synthesis in insects and mites.

The concentrate includes, within a range of activities, the lepidopteron, coleopterous, aphidides, isopteron, dipteral larvas and similar, as well as mites and other insects, provided its wide action spectrum, further serving to combat a great number of home and stores plagues, and plagues that may transmit endemic diseases such as the malaria, paludal, ...

One of the main active products in the concentrate is based on the designated as New Generation, where it is provided with a power product for rapid action: Pyrethroids (Cypermethrin or Deltamithrin).

It is a non-irritant, non-toxic product, and has a negative index of mutagenesis, having been duly tested.

The concentrate, once emulsified, is employed by means of spraying machines for treatments in general, or by microdiffusion machines or by cold aspersion or by previous pressure O.B.V. (machines, vats, pistols or similar), being also usable with simples domestic sprays so that it may be used on places such as curtains, mattresses, tapestries, ...., or it will be able to be introduced, according to a recommended quantity, in a bucket with water for the daily cleanliness of households.

On the other hand, the formulation emulsifiable in water for the concentrated converts it into a product of highly recomendable use, together with those customary cleanliness products for any object or material where insect and mites can be usually found: carpets, bags for dust exhausters, sofas, mattresses, chairs, curtains, tapestries, washing machines.

It can be also used in agricultural cultures, cereal stores, plants, public health cares, domestic use, zoosanitary treatments, etc.

The difference with respect to insecticide products is that upon having resins incorporated, it permits that the active products may microencapsulated in the polymer and thus provide it with a residual power that gives it a greater efficiency than in the case of the traditional insecticides; furthermore, it allows a greater efficiency of the product by letting, once it has been applied, a small coating of resin.

Its use, according to its concentrations, is recommended either for plants and for animals, as well as for specific treatments for control of arthropods in anyone of their stages (ovicide, larvicide, nymph).

In particular, the present invention comprises a composition including:

| FROM | | TO |
|---|---|---|
| Water | 10% | 80% |
| Resin (vinylic or acrylic)... | 1% | 100% |
| Chetin inhibitor | 0.001% | 40% |
| Organophospohorates | 0.001% | 5% |
| Pyrethroids (cypermethrin or deltamithrin) | 0.001% | 20% |
| | | |

where all the percentages are expressed as weight with respect to the total weight of the composition.

All the products comprised in the concentrate are commercially available or they are easily obtainable by known methods.

Resins can be vinylic or acrylic emulsions.

The chitin inhibitor, of basic action, belongs to the flufenoxuron, fenoxycarb, hexythiazox, diflubenzuron, hexaflumuron, triflumuron and hydroprene.

As organophosphorates, the Ethyl chlorpyriphon, 0,0-diethyl, 0-(3, 5, 6-trichloro-2-pyridyl) thiophosphate, 0,0-diethyl 0-(2-Isopropyl-6-methyl-Pyrimidin-4-yl) Phosphorothioate are used.

Pirethroids of New Generation will be those of type II, among which the Cypermethrin, Deltamithrin, Cyfluthrin, Fluvalidate and Fenvalerate can be emphasized, with systematical action insecticide effects, and being also active by direct contact and by ingestion. Likewise, they have a Nematicide effect. They are effective by virtue of their wide action spectrum in the most of plagues produced by insects, being also photostable and without degrading by contact with the water.

## Claims

1. EMULSIFIABLE VINYLIC CONCENTRATE INHIBITING THE CHITIN SYNTHESIS IN ARTHROPODS, FOR THE CONTROL OF PESTS AND ALLERGENS, which comprises:
| FROM | | TO |
|---|---|---|
| Water | 10% | 80% |
| Resin (vinylic or acrylic) | 1% | 100% |
| Chitin inhibitor ........ | 0.001% | 40% |
| Organophosphorates ...... | 0.001% | 5% |
| Pyrethroids (cypermethrin or deltamithrin) | 0.001% | 20% |
where all the percentages are expressed as weight with respect to the total weight of the composition.

2. EMULSIFIABLE VINYLIC CONCENTRATE INHIBITING THE CHITIN SYNTHESIS IN ARTHROPODS, FOR THE CONTROL OF PESTS AND ALLERGENS according to claim 1, wherein the resins are vinylic and acrylic emulsions.

3. EMULSIFIABLE VINYLIC CONCENTRATE INHIBITING THE CHITIN SYNTHESIS IN ARTHROPODS, FOR THE CONTROL OF PESTS AND ALLERGENS according to claim 1, wherein the chitin inhibitor, with basic action, belongs to the group of the flufenoxuron, fenoxycarb, hexythiazox, diflubenzuron, hexaflumuron, triflumuron and hydroprene.

4. EMULSIFIABLE VINYLIC CONCENTRATE INHIBITING THE CHITIN SYNTHESIS IN ARTHROPODS, FOR THE CONTROL OF PESTS AND ALLERGENS according to claim 1, wherein the organophosphorates are ethyl chlorpyriphon, 0,0-diethyl thiophosphate, 0-(3, 5, 6-trichloro-2-pyridyl), 0,0-diethyl 0-(2-Isopropyl-6-methyl-Pyrimidin-4-yl) Phosphorothioate.

5. EMULSIFIABLE VINYLIC CONCENTRATE INHIBITING THE CHITIN SYNTHESIS IN ARTHROPODS, FOR THE CONTROL OF PESTS AND ALLERGENS according to clain 1, wherein Pyrethroids are Cypermethrin, Deltamithrin, Cyfluthrin, Fluvalidate and Fenvalerate.

6. EMULSIFIABLE VINYLIC CONCENTRATE INHIBITING THE CHITIN SYNTHESIS IN ARTHROPODS, FOR THE CONTROL OF PESTS AND ALLERGENS.
